Europäisches Patentamt

European Patent Office

Office européen des brevets

(19)

(11) Veröffentlichungsnummer: **0 192 089 B1**

(12) # EUROPÄISCHE PATENTSCHRIFT

(45) Veröffentlichungstag der Patentschrift: 28.08.91

(51) Int. Cl.⁵: **A01C 17/00**

(21) Anmeldenummer: 86101146.8

(22) Anmeldetag: 29.01.86

Teilanmeldung 86115443 eingereicht am 07.11.86.

(54) **Schleuderstreuer, insbesondere für gekörnte Düngemittel.**

(30) Priorität: 06.02.85 DE 3503908
28.03.85 DE 3511240

(43) Veröffentlichungstag der Anmeldung:
27.08.86 Patentblatt 86/35

(45) Bekanntmachung des Hinweises auf die
Patenterteilung:
28.08.91 Patentblatt 91/35

(84) Benannte Vertragsstaaten:
AT BE CH DE FR GB IT LI LU NL SE

(56) Entgegenhaltungen:
DE-A- 1 557 909      DE-A- 1 557 916
DE-A- 1 810 947      DE-A- 2 430 029
DE-A- 3 244 058      DE-B- 1 818 036
FR-A- 2 281 795      GB-A- 2 029 185
GB-A- 2 100 565      US-A- 2 526 081
US-A- 2 594 084      US-A- 3 157 403
US-A- 4 367 848

(73) Patentinhaber: **Amazonen-Werke H. Dreyer
GmbH & Co. KG
Postfach 51
W-4507 Hasbergen-Gaste(DE)**

(72) Erfinder: **Dreyer, Heinz, Dipl.-Ing.Univ-Dr.
Am Amazonenwerk 7
W-4507 Hasbergen(DE)**

(74) Vertreter: **Patentanwälte Grünecker, Kinkeldey, Stockmair & Partner
Maximilianstrasse 58
W-8000 München 22(DE)**

## Beschreibung

Die Erfindung betrifft eine Vorrichtung, bestehend aus einem Schleuderstreuer und Austauschdosiereinrichtung nach dem Oberbegriff des Anspruchs 1.

Aus der DE-C-28 35 011 ist ein Schleuderstreuer bekannt, bei dem die Dosiereinrichtung an dem Vorratsbehälter an einem Anschlußelement leicht lösbar befestigt ist. Bei diesem Anbauschleuderstreuer können an dem Anschlußelement Bodenplatten mit verschiedenen Auslauföffnungen angeordnet werden.

Es sind jedoch für diese Maschine immer wieder die gleich ausgebildeten Dosiermechanismen vorgesehen, d.h., immer eine Bodenplatte mit einer Auslauföffnung, deren Öffnungsweite über einen Schieber jeweils einstellbar ist.

Aus der zum Stand der Technik nach Artikel 54 (3) EPÜ zahlenden EP-A-0175388 ist ebenfalls ein Anbauschleuderstreuer bekannt, bei dem die Bodenplatte, der Schieber und das Betätigungselement eine Dosier- und Baueinheit bilden, die über die Bodenplatte mittels einer Verbindungseinrichtung lösbar am Vorratsbehälter befestigt ist. Mehrere unterschiedlich ausgebildete derartige Dosiereinheiten sind jedoch nicht vorgesehen.

Der Erfindung liegt die Aufgabe zugrunde, das Ausbringen von Dünger bei dem bekannten Streuer flexibler zu gestalten.

Diese Aufgabe wird erfindungsgemäß mit einer Vorrichtung nach dem Oberbegriff des Anspruchs 1 durch dessen kennzeichnende Merkmale gelöst.

Infolge dieser Maßnahmen wird eine Grundmaschine geschaffen, die mit verschieden ausgebildeten Dosiermechanismen in einfacher Weise ausgestattet werden kann. Somit wird dem Landwirt die Möglichkeit gegeben, seine Grundmaschine jeweils mit dem von ihm gewünschten Dosiermechanismus auszustatten. Hierbei hat der Landwirt die Möglichkeit, seinem jeweiligen Einsatzzweck den entsprechend angepaßten Dosiermechanismus anzuordnen. Weiterhin ist die Schaffung einer Grundmaschine sehr gut für die Fertigung, Lagerung, für den Händler und den Landwirt als Kunden. Denn der Landwirt kann sofort oder auch erst später wahlweise seinen Schleuderstreuer mit einem oder mehreren speziellen Dosiermechanismen ausrüsten. Somit ist es für den Landwirt möglich, zunächst nur wenig Geld in den Schleuderstreuer zu investieren und seinen Schleuderstreuer mit dem einfachsten und preiswertesten Dosiermechanismus auszustatten. Später kann der Landwirt dann immer noch seinen Schleuderstreuer in sehr preiswerter Weise mit einem aufwendigerem Dosiermechanismus ausstatten. Hierzu braucht der Landwirt sich dann keinen neuen Schleuderstreuer anzuschaffen, sondern es ist lediglich erforderlich, daß er sich einen neuen Dosiermechanismus kauft und diesen gegen den vorhandenen Dosiermechanismus austauscht und an dem Anschlußelement befestigt. Somit kann der Landwirt seinen Schleuderstreuer auf kostengünstige Weise immer wieder an den neuen Stand der Technik anpassen und seine Maschine mit den neusten technischen Errungenschaften sehr kostengünstig ausstatten.

Hiebei sieht die Erfindung vor, daß an dem Anschlußelement jeweils verschieden ausgebildete und komplett ausgestattete Dosiermechanismen auswechselbar befestigbar sind.

Hierzu ist dann erfindungsgemäß vorgesehen, daß die Dosiermechanismen jeweils auf das Anschlußelement abgestimmte Anschlüsse aufweisen.

Im Folgenden werden Ausführungsbeispiele der Erfindung anhand einer Zeichnung näher beschrieben.

Hierbei zeigen:

Fig. 1    einen erfindungsgemäßen Anbauschleuderstreuer in der Ansicht von hinteh,

Fig. 2    den Streuer in der Draufsicht und in vergrößertem Maßstab,

Fig. 3    den Streuer in Draufsicht mit einer anderen Dosiereinrichtung,

Fig. 4    die Dosiereinrichtung gemäß Fig. 3 in der Draufsicht und vergrößertem Maßstab,

Fig. 5    eine weitere Dosiereinrichtung zur Anordnung an den Anbauschleuderstreuer in der Draufsicht,

Fig. 6    eine andere Dosiereinrichtung zur Anordnung an den Anbauschleuderstreuer ebenfalls in der Draufsicht,

Fig. 7    noch eine weitere Dosiereinrichtung zur Anordnung an den Anbauschleuderstreuer ebenfalls in der Draufsicht,

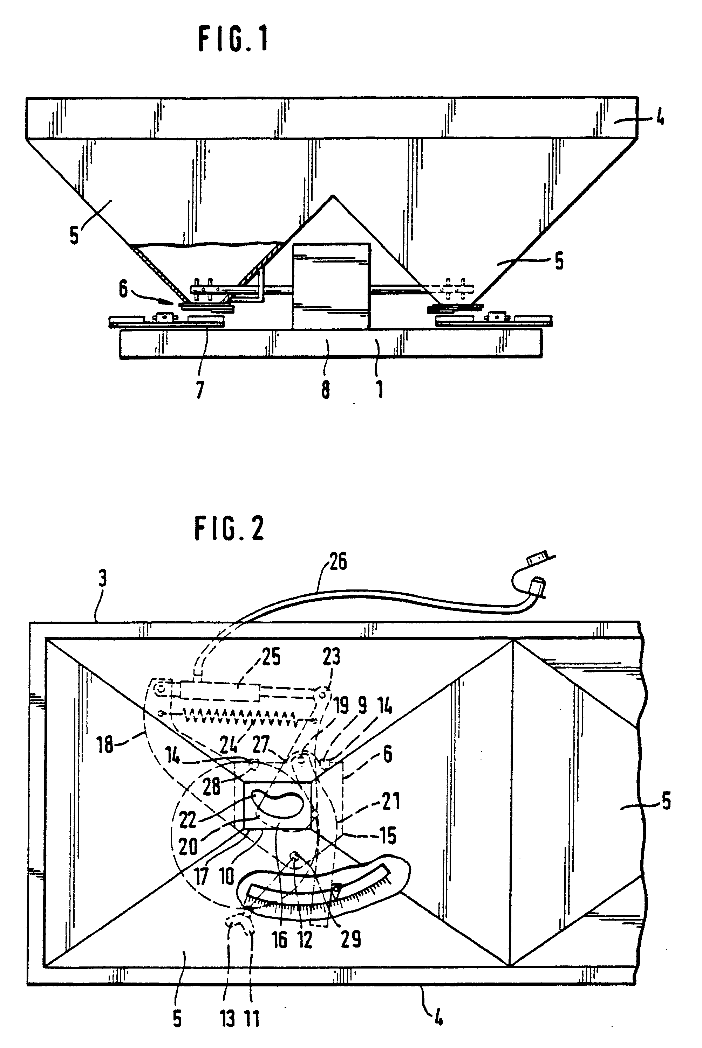

Der in den Fig. 1 und 2 dargestellte Anbauschleuderstreuer weist den Rahmen 1, auf, der auf seiner in Fahrtrichtung 2 gesehenen vorderen Seite 3 mit Kupplungselementen zum Anbau an einen nicht dargestellten Schlepper ausgestattet ist. Ferner ist am Rahmen 1 der Vorratsbehälter 4 befestigt, der zwei durch das dachförmige Mittelteil getrennte trichterförmige Behälterteile 5 aufweist. Die trichterförmigen Behälterteile 5 weisen jeweils den als lösbare Bodenplatte 6 ausgebildeten Dosiermechanismus auf. Unterhalb der Bodenplatte 6 ist jeweils einer als Schleuderscheibe 7 ausgebildete Streueinrichtung angeordnet, die über das Getriebe 8 von der Schlepperzapfwelle rotierend angetrieben werden.

Unter dem trichterförmigen Behälterteil 5 ist jeweils das als Kuppelplatte 9 ausgebildete Anschlußelement angeschweißt. Die Kuppelplatte 9 weist einen Ausschnitt 10 auf, der in etwa dem unteren Querschnitt des Behälterteiles 5 entspricht.

Die Kuppelplatte 9 ist derart unter dem Vorratsbehälter 4 angeschweißt, daß sich die von Hand lösbaren Verbindungselemente 11 nicht an der Seite 3 des Vorratsbehälter 4 befinden, an der die Dreipunktkupplungselementezum Anbau de Schleuderstreuers an dem Schlepper angeordnet sind; d.h. also, die Gewindebohrung 12, in die die Flügelschraube 13 eingeschraubt wird, befindet sich auf der frei zugänglichen Seite des Schleuderstreuers, wenn er an einen Schlepper angebaut ist. Auf der der Gewindebohrung 12 abgewandten Seite der Kuppelplatte 9 sind die Krallen 14 angeordnet. Unterhalb der Kuppelplatte 9 ist die aus der Tragplatte 15 und der Abdeckplatte 16 bestehende Bodenplatte 6 angeordnet. Die Tragplatte 15 weist den Ausschnitt 17 auf, der mit dem Ausschnitt 10 etwa deckungsgleich ist. Die Tragplatte 15 weist den nach vorn ragenden Tragarm 18 auf. An der Tragplatte 15 sind auf der Vorderseite an dem Gelenk 19 der Schieber 20 und der Anschlaghebel 21 zur Einstellung der Öffnungsweite der Auslauföffnung 22, die sich in der Abdeckplatte 16 befindet, angeordnet. Zwischen dem Tragarm 18 und dem Hebel 23 des Schiebers 20 sind die Zugfeder 24 und der als Fernbedienungselement ausgebildete Hydraulikzylinder 25 angeordnet. An dem Hydraulikzylinder 25 ist der Hydraulikschlauch 26 befestigt, über den der Hydraulikzylinder 25 an die Schlepperhydraulikanlage bzw. an ein Hydrauliksteuergerät anzuschließen ist. Der Schieber 20 ist hinter dem Gelenk 19 an der Stelle 27 durchgekröpft, so daß zwischen der Tragplatte 15 und dem Schieber 20 die Abdeckplatte 16 zu schieben ist.

Die Tragplatte 15 und die Abdeckplatte 16 weisen auf ihrer Vorderseite jeweils die Aussparungen 28 auf, in die die Krallen 14 fassen, damit ein Verschieben dieser Teile verhindert wird. Auf der Rückseite weisen die Tragplatte 15 und die Abdeckplatte 16 jeweils die mit der Kuppelplatte 9 deckungsgleichen Bohrungen 29 auf. Zunächst wird der aus nicht rostendem Stahl bestehende Schieber 20, der Anschlaghebel 21, die Zugfeder 24 und der Hydraulikzylinder 25 mit dem Hydraulikschlauch 27 an die Tragplatte 15 montiert. Jetzt wird die Vorderseite der Tragplatte 15 in die Krallen 14 gesteckt und anschließend wird die ebenfalls aus nicht rostendem Stahl hergestellte Abdeckplatte 16 zwischen die Tragplatte 15 und den Schieber 20 geschoben, so daß sie ebenfalls auf ihrer Vorderseite von den Krallen 14 gehalten wird. Zum Schluß wird die als Schnellverschluß ausgebildete Flügelschraube 13 durch die Bohrung 29 der Tragplatte 15 und Abdeckplatte 16 gesteckt und in die in sich in der Kuppelplatte 9 befindliche Gewindebohrung 12 eingeschraubt.

Somit kann nach dem bequemen Herausschrauben der leicht zugänglichen Flügelschraube 13 die aus Tragplatte 15 und der Abdeckplatte 16 bestehende Bodenplatte 6 mit dem Schieber 20, dem Anschlaghebel 21 und dem Hydraulikzylinder 25 mit dem Hydraulikschlauch 26 und der Schlauchkupplung 30 von dem Vorratsbehälter 4 abgenommen werden. Nach der Abnahme kann die Abdeckplatte 16 abgenommen werden. Nach der Abnahme kann die Abdeckplatte 16 und der Schieber 20 in bequemer Weise gereinigt und eingefettet bzw. eingeölt werden. Hierdurch wird die Lebensdauer dieser Teile verlängert und die Einstellgenauigkeit und das Verschließen der Auslauföffnung durch den Schieber 20 bleibt erhalten.

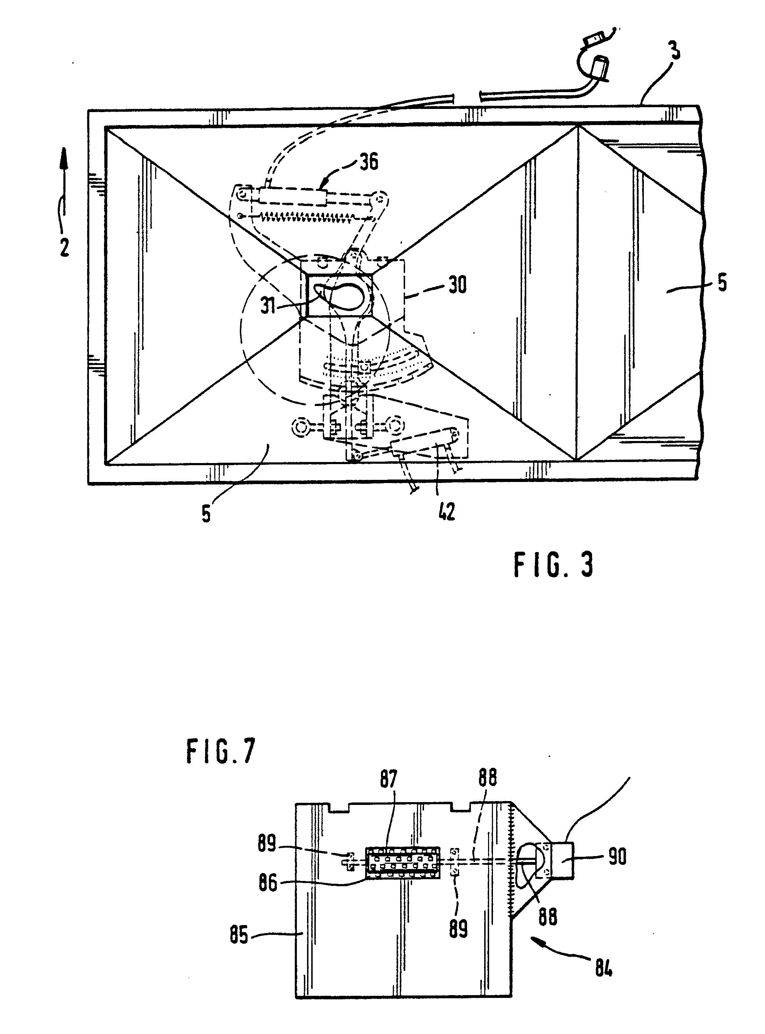

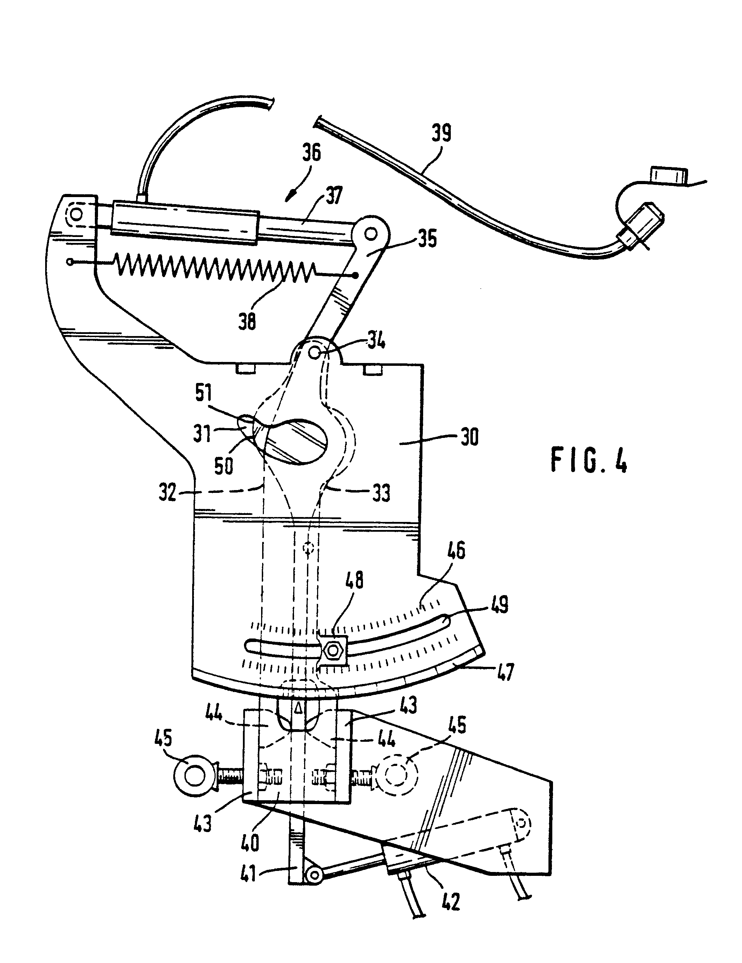

Unter dem Anbauschleuderstreuer ist gemäß Fig. 3 die Bodenplatte 6 gemäß Fig. 1 und 2 gegen die Bodenplatte 30 ausgetauscht. An dem als Kuppelplatte 9 ausgebildeten Anschlußelement ist jetzt das als Bodenplatte 30 ausgebildete Dosierorgan angeordnet. (vgl. Fig.4)

In jeder Bodenplatte 30 befindet sich jeweils eine Auslauföffnung 31, deren Öffnungsweite durch unter der Bodenplatte 30 und vor der Auslauföffnung 31 angeordnete Schieber 32 und 33 eingestellt werden kann. Unterhalb jeder Bodenplatte 30 sind die beiden Schieber 32 und 33 auf dem Bolzen 34 schwenkbar angeordnet. Direkt unter den Bodenplatte 30 befindet sich der Schieber 32. Unter dem Schieber 32 ist der Schieber 33 angeordnet, so daß sich der Schieber 32 zwischen der Bodenplatte 30 und dem Schieber 33 befindet. Der Bedienungshebel 35 des Schiebers 32 ragt nach vorm über den Bolzen 34 hinaus. An diesem über den Bolzen 34 hinausragenden Bedienungshebel 35 ist das als Fernbedienungsvorrichtung ausgebildete Bedienungselement 36 angeordnet. Dieses Bedienungselement 36 ist als einfach wirkender Hydraulikzylinder 37 und als dem Hydraulikzylinder 37 gegenwirkende Zugfeder 38 ausgebildet. Der Hydraulikylinder 37 und die Zugfeder 38 sind an der Bodenplatte 30 befestigt. Der jeweilige Hydraulikzylinder 37 ist über einen Hydraulikschlauch 39 an die Hydraulikanlage eines Schleppers angeschlossen und kann über Steuergeräte von dortaus vom Schlepperfahrer betätigt werden.

Der Schieber 32 weist auf seiner dem Bedienungshebel 35 abgewandten Seite das Verlängerungsstück 40 auf. Der Schieber 33 besitzt ebenfalls einen Bedienungshebel 41, der sich bis über das Verlängerungsstück 40 hinaus erstreckt. Zwischen dem Bedienungshebel 41 des Schiebers 33 und dem Verlängerungsstück 40 des Schiebers 32 ist die aus dem doppelt wirkenden Hydraulikzylinder 42 bestehende Fernbedienungsvorrichtung angeordnet. Dieser Hydraulikzylinder ist über Hydraulikschläuche mit der Hydraulikanlage des Schleppers verbunden und kann vom Schleppersitz aus vom Schlepperfahrer über Steuergeräte betätigt werden. Auf beiden Seiten des Bedienungshebels 31 sind an dem Verlängerungsstück 40 des Schiebers 32 jeweils die aufrecht stehenden Bleche 43 angeschweißt. An diesen Blechen 43 sind jeweils die Gummipuffer 44 befestigt. Diese Gummipuffer 44 liegen an dem Bedienungshebel 41 des Schiebers 33 an, so daß sie den Bedienungshebel 41 und somit den Schieber 33 in einer genau definierten Lage gegenüber dem Schieber 32 halten bzw. fixieren, wenn der Hydraulikzylinder 42 drucklos geschaltet ist. Weiterhin sind an den Blechen 43 noch die beiden als einstellbare Schrauben 45 ausgebildeten Anschläge angeordnet. An der Bodenplatte 6 befinden sich noch die Einstellskalen 46 und 47 und das einstellbare mechanische Element 48 für die Festlegung der Grundöffnungsstellung des Schiebers 33. Das einstellbare Element 48 ist in dem Langloch 49 verstellbar. An diesem einstellbaren Element 48 liegt das Verlängerungsstück 40 des Schiebers 32 an, wenn die Schieber sich in ihrer Öffnungsstellung befinden. Die Einstellskala 46 ist für die Grundeinstellung vorgesehen und weist eine lineare Teilung auf. Anhand dieser Einstellskala in Verbindung mit den Werten einer Streutabelle kann das einstellbare Element 48 eingestellt werden. Die Einstellskala 47 weist eine prozentuale Teilung auf, so daß jeweils Ausbringmengenwerte eingestellt werden können, die prozentual größer und kleiner als der Grundmengenwert sind. Diese größeren und kleineren Ausbringmengenwerte werden durch die Einstellung der Schrauben 45 festgelegt. Durch die prozentuale Einteilung der Skala braucht der Landwirt jeweils nicht den Änderungswert errechnen, wenn er beispielsweise 10% mehr oder weniger als den Grundmengenwert ausbringen will.

Die Auslauföffnungen 31 freigebende Kante 50 des Schiebers 32 springt gegenüber der Kante 51 des Schiebers 33 etwas zurück. Somit kann durch Verstellen des Schiebers 33 gegenüber dem Schieber 32 mit Hilfe des Hydraulikzylinders 42 jeweils ein kleinerer und ein größerer Ausbringmengenwert während des Ausbringvorganges eingestellt werden.

Die Veränderung der Ausbringmenge pro Flächeneinheit während des Ausbringvorganges und während der Fahrt (Plus-Minus-Schaltung) geschieht folgendermaßen:
Zunächst stellt der Landwirt anhand der Streutabelle das einstellbare Element 48 so ein, daß der Zeiger dieses einstellbaren Elementes auf den aus der Streutabelle entnommenen Wert der Skala 46 zeigt. Der in Fig. 4 eingezeichneten Stellung befinden sich die Schieber 32 und 33 in Betriebstellung; d.h. in Öffnungsstellung. In dieser beispielhaft eingezeichneten Stellung wird nur ein relativ kleiner Querschnitt der Auslauföffnung freigegeben, so daß eine relativ kleine Ausbringmenge ausgebracht wird. Über den Hydraulikzylinder 37 werden die Schieber 32 und 33 betätigt. Wenn der Schieber, wie in dem hier dargestellten Fall drucklos geschaltet ist, zieht die Zugfeder 38 die beiden Schieber in ihre (eingezeichnete) Öffnungsstellung. Wenn nun der Hydraulikzylinder 37 mit Druck beaufschlagt wird, so wird die Auslauföffnung geschlossen, indem die Schieber in ihre Schließstellung bewegt werden und die Auslauföffnung abdecken. In der Öffnungsstellung liegt das Verlängerungsstück 40 des Schiebers 32 an dem einstellbaren Anschlag 48 an. Wenn der Schieber 42 drucklos geschaltet ist, befindet sich der Schieber 41 in seiner Grundeinstellung, in der er von den Gummipuffern 42 gehalten wird.

Mit Hilfe der Schrauben 45 kann der Landwirt nun vor Beginn der Arbeit einen größeren und einen kleineren Ausbringmengenwert gegenüber dem Grundausbringmengenwert einstellen. Hierbei ist von besonderem Vorteil, daß die Skala 47 eine prozentuale Einteilung aufweist. So braucht der Landwirt nur den Schieber 41 jeweils nur soweit zu bewegen, bis der auf dem Bedienungshebel 41 angeordnete Zeiger mit dem gewünschten größeren und kleineren Ausbringmengenänderungswert übereinstimmt. Diese beiden Extremstellungen des Schiebers 33 werden durch die Einstellschrauben 43 entsprechend eingestellt.

Auf dem Acker werden am Feldende die Auslauföffnungen dadurch geöffnet, daß die Hydraulikzylinder 37 über die auf dem Schlepper befindlichen Steuergeräte drucklos geschaltet werden. Schlagartig ziehen die Zugfedern 38 die jeweiligen Schieber 32 und 33 in ihre eingestellte Öffnungsstellung, so daß das Verlängerungstück 40 an dem einstellbaren Element 48 anliegt. Wenn der Landwirt nun während der Feldüberfahrt und des Ausbringvorganges aufgrund der vorliegenden Einsatzverhältnisse eine etwas kleinere und größere Ausbringmenge ausbringen will, so betätigt er das entsprechende Steuergerät, so daß der Hydraulikzylinder 42 entsprechend betätigt wird. Über diesen Hydraulikzylinder 42 wird dann der Schieber 33 gegenüber dem Schieber 32 bewegt, so daß entsprechend der Betätigung des Hydraulikzylinders 42 ein kleinerer und ein größerer Öffnungsquerschnitt gegenüber der Grundeinstellung eingestellt wird. Soll anschließend wieder die eingestellte Grundmenge ausgebracht werden, so wird der Hydraulikzylinder 42 vom Landwirt über das entsprechende Steuergerät drucklos geschaltet. Jetzt drücken die Gummipuffer 42 den Schieber 33 wieder in seine Grundeinstellung. Somit ist also der durch den Schieber 33 freigegebene Öffnungsquerschnitt der Auslauföffnung 31 während des Einsatzes des Streuers über die als Hydraulikzylinder 42 ausgebildete Fernbedienungsvorrichtung derart veränderbar, daß ein kleinerer und ein größerer Öffnungsquerschnitt gegenüber der Grundeinstellung einstellbar ist, so daß eine kleinere und eine größere Ausbringmenge (Öffnungsweite der Auslauföffnung) jeweils einstellbar ist. Der Schieber 32 ist somit gegenüber dem Bedienungselement 36 mit Hilfe des als Fernbedienungsvorrichtung ausgebildeten Hydraulikzylinders 42 hin- und herbewegbar.

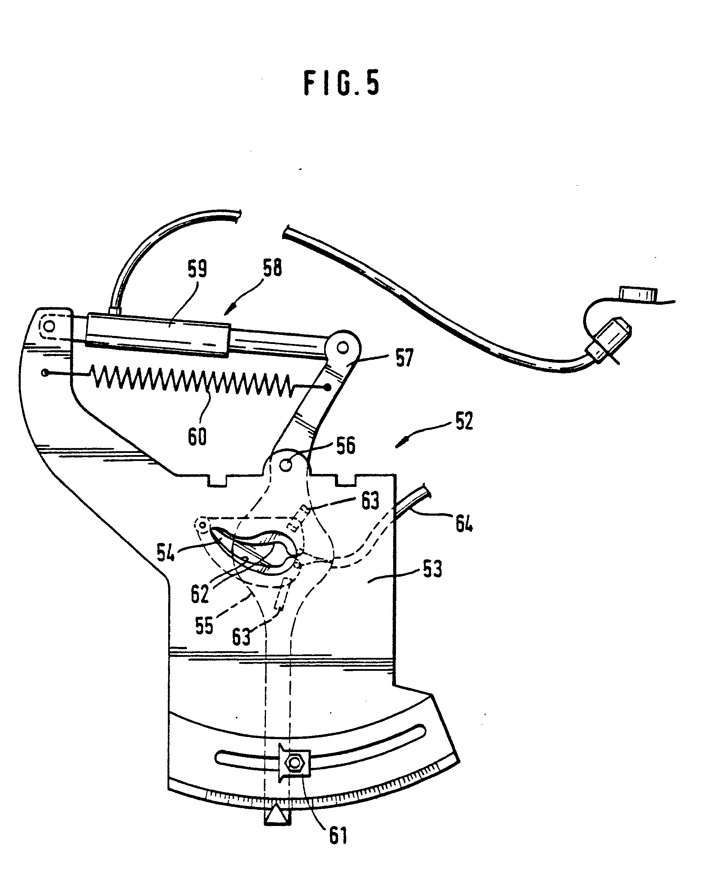

Die ebenfalls eine Plus-Minus-Schaltung aufweisende Dosiereinheit 52 gemäß Fig. 5 ist ebenfalls an des als Kuppelplatte 9 ausgebildete Anschlußelement unter den Behälterteilen 5 des Vorratsbehälters 4 des Anbauschleuderstreuers anzuordnen. Die Dosiereinheit 52 weist die Bodenplatte 53 mit der Auslauföffnung 54 auf. Unter der Bodenplatte 53 ist der Schieber 55 an dem Bolzen 56 angeordnet. Der Schieber 55 weist den über den Bolzen 56 hinausragende Bedienungshebel 57 auf. Zwischen dem Bedienungshebel 57 und der Bodenplatte 53 ist das Bedienungselement 58 angeordnet. Das Bedienungselement 58 weist den Hydraulikzylinder 59 und die Zugfeder 60 auf. Über das Bedienungselement 58 wird der Schieber 55 jeweils in seine Schließ- bzw. Öffnungsstellung gebracht. Die Öffnungsstellung des Schiebers wird durch das an der Bodenplatte 53 einstellbar angeordnete Anschlagelement 61 bestimmt.

Zwischen der Bodenplatte 53 und dem Schieber 55 sind seitlich der Auslauföffnung 54 beidseits als Blendenelemente ausgebildete Schieber 62 angeordnet. Entsprechend ihrer jeweiligen Einstellung decken die Blendenelemente 62 jeweils einen entsprechenden Teil der Auslauföffnung 54 beidseitig ab. An der Bodenplatte 53 sind in dem Bereich der Blendenelemente 62 die einstellbaren Anschläge 63 angeordnet. Jedem Blendenelement 62 ist ein Anschlag 63 zugeordnet. Die Anschläge 63 bestimmen drei Positionen der Blendenelemente 62 jeweils exakt. Die Positionen sind die Grundeinstellung sowie eine Minimal- und eine Maximaleinstellung. Die Blendenelemente 62 sind gemeinsam über die an ihnen angeschlossene Fernbedienungsvorrichtung 64, die als Bowdenzug ausgebildet ist, verstellbar. Über die Verstellung der Blendenelemente 62 ist die Ausbringmenge pro Flächeneinheit zu verändern, ohne daß über das Bedienungselement 58 der Schieber 55 verstellt wird. Mit dem Bedienungselement 58 wird der Schieber 55 ausschließlich nur in seine Schließ- bzw. Öffnungsstellung bewegt, wobei die Öffnungsstellung des Schiebers 55 von dem einstellbaren Element 61 bestimmt wird. Durch die gleichzeitige Verstellung der beiden Blendenelemente 62 bleibt die Linie, auf der sich der Flächenschwerpunkt der jeweiligen Öffnungsweite bei unterschiedlichen Öffnungsstellungen des Schiebers 55 verschiebt, immer erhalten. Hierdurch wird immer die gleiche Lage des Streufächers beibehalten; der Mengeneffekt tritt nicht auf.

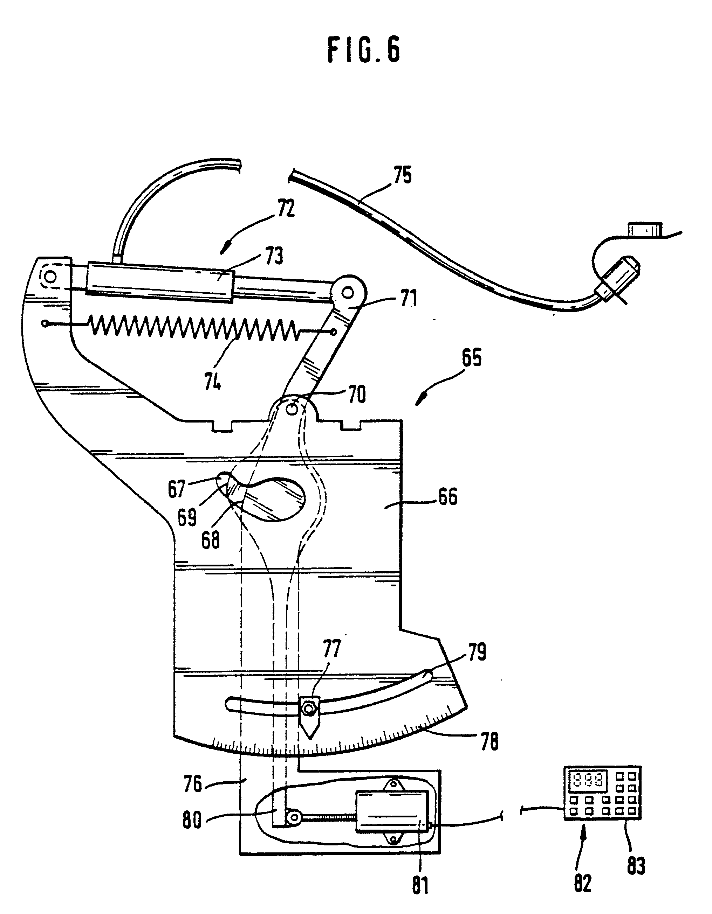

Die Dosiereinheit 65 gemäß Fig. 6 ist ebenfalls an den als Kuppelplatte 9 ausgebildeten Anschlußelementen unter den Behälterteilen 5 des Vorratsbehälters 4 des Anbauschleuderstreuers anzuordnen. Die Dosiereinheit 65 weist die Bodenplatte 66 mit der Auslauföffnung 67 auf. Unterhalb der Bodenplatte 66 sind die beiden Schieber 68 und 69 auf dem an der Bodenplatte 66 angeschweißten Bolzen 70 angeordnet. Direkt unterhalb der Bodenplatte 66 befindet sich der Schieber 68. Unter dem Schieber 68 ist der Schieber 69 angeordnet, so daß sich der Schieber 68 zwischen der Bodenplatte 66 und dem Schieber 69 befindet. Der Bedienungshebel 71 des Schiebers 68 ragt nach vorn über den Bolzen 70 hinaus. An diesem über den Bolzen 70 hinausragenden Bedienungshebel 71 ist das als Fernbedienungsvorrichtung ausgebildete Bedienungselement 71 angeordnet. Dieses Bedienungselement 71 ist als einfach wirkender Hydraulikzylinder 72 und als dem Hydraulikzylinder entgegenwirkende Zugfeder 74 ausgebildet. Der Hydraulikzylinder 73 und die Zugfeder 74 sind an der Bodenplatte 66 befestigt. Der jeweilige Hydraulikzylinder 73 ist über einen Hydraulikschlauch 75 an die Hydraulikanlage eines Schleppers angeschlossen und kann über Steuergeräte von dortaus vorn Schlepperfahrer betätigt werden. Mittels des Bedienungselementes 71 werden die Schieber 68 und 69 in ihre Schließ- bzw. Öffnungsstellung gebracht.

Der Schieber 68 weist auf seiner dem Bedienungshebel 71 abgewandten Seite das Verlängerungsstück 76 auf. Dieses Verlängerungsstück 76 liegt in der Öffnungsstellung der Schieber 68 und 69 an dem einstellbaren Element 77 an, welches im Bereich der Skala 78 an der Bodenplatte 66 in dem Langloch 79 einstellbar angeordnet ist. Dieses einstellbare Element 77 bestimmt die Grundöffnungsstellung der Schieber 68 und 69. Der Schieber 69 besitzt ebenfalls einen Bedienungshebel 80, der ungefähr bis zum Ende des Verlängerungsstückes 76 reicht. Zwischen dem Bedienungshebel 80 des Schiebers 69 und dem Verlängerungsstück 76 ist der Stellmotor 81 angeordnet.

An dem Stellmotor 81 ist die elektronische Steuer- und Regeleinrichtung 82 angeschlossen, die in dem Regelkasten 83 untergebracht ist. Über die Regeleinrichtung 82 erhält der Stellmotor 81 entsprechende Impulse, um den Schieber 69 zu verstellen, so daß die Ausbringmenge durch eine Änderung des Öffnungsquerschnittes der Auslauföffnung 78 verändert werden kann. Hierbei sind verschiedene Arten der Regelung denkbar. In dem einen Fall kann eine Regelung vorgesehen sein, die bei wechselnden Fahrgeschwindigkeiten die Ausbringmenge Material pro Flächeneinheit konstant hält. In einem anderen Fall kann eine Regelung vorgesehen sein, über die verschiedene in die Regeleinrichtung 82 einprogrammierte Ausbringmengen durch den Schlepperfahrer abrufbar sind. Wobei dann die jeweils kleinere oder größere Ausbringmenge pro Flächeneinheit von dem Stellmotor 82 eingestellt wird, in dem der Stellmotor 81 entsprechend der ihm von der Regeleinrichtung 82 übermittelten Impulse den Schieber 69 verstellt. Es ist auch möglich, daß diese beiden vorbeschriebenen Regelarten kombiniert in die Regeleinrichtung eingespeichert sind.

Die Dosiereinheit 84 gemäß der Fig. 7 ist ebenfalls an die als Kuppelplatte 9 ausgebildeten Anschlußelemente unter den Behälterteilen 5 des Vorratsbehälters 4 des Anbauschleuderstreuers anzuordnen. Die Dosiereinheit 84 ist als Zwangsdosierungssystem ausgebildet. Auch die Dosiereinheit 84 weist eine Bodenplatte 85 auf. In der Bodenplatte 85 ist die Auslauföffnung 86 angeordnet. In der Auslauföffnung 86 ist die Dosierwalze 78 angeordnet. Die Dosierwalze 87 ist auf der Dosierwelle 88 befestigt, die mittels der Lager 89 unter der Bodenplatte 85 gelagert ist. Die Dosierwalze 87 wird von dem Antriebsmotor 90, der an der Dosierwelle 88 und an der Bodenplatte 85 befestigt ist, angetrieben. Die Drehzahl des Antriebsmotors 90 und somit der Dosierwalze 87 wird von einer nicht dargestellten Regeleinrichtung bestimmt. Diese Regeleinrichtung weist ein Einstellelement auf, so daß verschiedene Drehzahlen und somit Ausbringmengen Material pro Flächeneinheit einzustellen sind. Die Dosierwalzen 87 führen das sich im Vorratsbehälter 4 befindliche Material, beispielsweise Düngemittel, den Schleuderscheiben 7 zu. Damit bei unterschiedlichen Ausbringmengen bei dem Schleuderstreuer kein Mengeneffekt auftritt, ist unter den Dosierwalzen 87 ein nicht dargestellter Verstellmechanismus angeordnet, der entsprechend der Drehzahl der Dosierwalzen 87 und somit der jeweiligen Ausbringmenge Material den Dünger so auf die Schleuderscheiben 7 leitet, daß sich der Aufgabeschwerpunkt des Materiales auf den Schleuderscheiben 7 verschiebt.

Es soll noch darauf hingewiesen werden, daß die Anordnung der Einstellskalen an den Bodenplatten sehr große Vorteile hat. Hierdurch ist es möglich, daß die Schieber bereits vor der Monatage der Bodenplatten an die Vorratsbehälter exakt eingestellt bzw. einjustiert werden können. Die Toleranzen zwischen den Schiebern und dem Rahmen bzw. Vorratsbehälter wirken sich nicht auf die exakte Einstellung der Schieber aus. Weiterhin ist es in vorteilhafter Weise möglich, daß der jeweilige Dosiermechanismus jeweils genau einjustiert werden kann und somit getrennt von der Maschine versandt und verpackt werden kann. Auch ist keine besondere neue Einjustierung zwischen den Schiebern und der Maschine erforderlich, wenn die verschiedenen Dosiermechanismen jeweils an den Vorratsbehälter angeordnet werden. Jeder Dosiermechanismus ist komplett abzunehmen und braucht nicht auf Skalen, die sich an der Maschine befinden, eingestellt zu werden.

## Patentansprüche

1. Vorrichtung, bestehend aus einem Schleuderstreuer und Austauschdosiereinrichtung, wobei der Schleuderstreuer einen Vorratsbehälter (4) mit einem daran angeordneten Anschlußelement (9), eine Verteileinrichtung mit zumindest zwei antreibbaren Verteilorganen (7) und eine, an dem Anschlußelement (9) leicht lösbar befestigte Dosiereinrichtung (6, 30, 52, 65, 84) aufweist, die aus einer Bodenplatte (6) mit einer Auslauföffnung und einem Schieber (20) umfaßt, und über die die auszubringenden Matrialpartikel in einstellbaren Mengen den Verteilorganen (7) zuführbar sind, und wobei die Austauschdosiereinrichtung mit Anschlüssen derart versehen ist, daß sie an dem Anschlußelement (9) anbringbar ist, dadurch **gekennzeichnet**, daß die Austauschdosiereinrichtung als Dosiereinrichtung mit Plus-Minus-Schaltung (30, 52, 65) oder als Dosiereinrichtung mit elektronischer Steuer- oder Regeleinrichtung (82) oder als Dosiereinrichtung mit Zwangsdosiersystem (84) ausgebildet ist, daß die Dosiereinrichtung als Ganzes lösbar an dem Anschlußelement (9) angeordnet ist und gegen eine der vorgenannten Austauschdosiereinrichtung austauschbar ist.

## Claims

1. A device comprising a centrifugal distributor and an interchangeable metering device, the centrifugal distributor having a hopper (4) with located thereon a connector member (9), a distributing device with at least two driveable distributing units (7) and a metering device (6, 30, 52, 65, 84) which is attached in an easily-removable manner to the connector member (9), and which comprises a baseplate (6) with an outlet opening and a slide (20), and through which the particles of material to be distributed can be passed in adjustable amounts to the distributor units (7), the interchangeable metering device being provided with connections in such a way that it can be attached to the connector member (9), characterised in that the interchangeable metering device is in the form of a metering device with a plus-minus switching facility (30, 52, 65) or is in the form of a metering device with an automatic metering system (84), that the metering device is removably located as a whole on the connector member (9), and can be exchanged for one of the abovenamed interchangeable metering devices.

**Revendications**

1. Dispositif composé d'un distributeur centrifuge et d'une installation de dosage remplaçable, le distributeur centrifuge comprend un réservoir d'alimentation (4) portant un élément de raccordement (9), une installation de distribution avec au moins deux organes de distribution (7), entraînés et une installation de dosage (6, 30, 52, 65, 84) fixée de manière facilement amovible sur l'élément de raccordement (9), cette installation de dosage se composant d'une plaque de fond (6) avec un orifice de sortie et un tiroir (20) pour fournir aux organes distributeurs (7) des quantités réglées de produit en particules, à distribuer, et l'installation de dosage échangeable est munie d'éléments de raccordement lui permettant d'être montée sur l'élément de raccordement (9), dispositif caractérisé en ce que l'installation de dosage échangeable est une installation de dosage avec un moyen +/- (30, 52, 65) ou encore une installation de dosage avec une installation de commande ou de régulation (82) électronique ou une installation de dosage avec système de dosage forcé (84), l'installation de dosage étant montée sur l'élément de raccordement (9) de manière détachable globalement pour pouvoir être remplacée par une installation de dosage échangeable.

## FIG.1

## FIG.2

FIG. 3

FIG.7

FIG. 4

# FIG.5

# FIG.6